# EUROPÄISCHE PATENTSCHRIFT

(11) **EP 1 566 902 B1**
(45) Veröffentlichungstag und Bekanntmachung des Hinweises auf die Patenterteilung: **27.12.2006**
(21) Anmeldenummer: 05000093.4
(22) Anmeldetag: 05.01.2005
(51) Int. Cl.: H04B 10/00

(54) **Verfahren zur Energieübertragung mittels kohärenter elektromagnetischer Strahlung**
Method of energy transmission using coherent electromagnetic radiation
Procédé de transmission d'énergie utilisant des rayons électromagnétiques cohérents

(30) Priorität: 21.02.2004 DE 102004008681
(43) Veröffentlichungstag der Anmeldung: 24.08.2005
(73) Patentinhaber: EADS Space Transportation GmbH, 28199 Bremen (DE)
(72) Erfinder: Steinsiek, Frank, 28205 Bremen (DE); Foth, Wolf-Peter, 28844 Weyhe (DE); Weber, Karl-Heinz, Dr., 28215 Bremen (DE); Foth, Hans-Jochen, Dr., 67663 Kaiserslautern (DE); Schäfer, Christian, 34537 Bald Wildungen (DE)
(74) Vertreter: Hansmann, Dierk

(56) Entgegenhaltungen:
- EP-A- 1 191 715
- US-A- 3 942 894
- US-A- 5 142 400
- US-A- 5 260 639
- US-B1- 6 407 535
- US-B2- 6 534 705

## Beschreibung

Die Erfindung betrifft ein Verfahren zur Energieübertragung und Ausrichtung eines mobilen Empfängers an einem Raumfahrzeug und einer Sendeeinheit, bei dem die Energie in Form kohärenter elektromagnetischer Strahlung übertragen wird, die als gerichteter, geregelter Laserstrahl von einer Sendeeinheit auf den Empfänger gesandt wird.

Verfahren und Vorrichtungen dieser Art, die ohne direkten mechanischen und/oder elektrischen Kontakt arbeiten, sind bereits bekannt; sie finden bisher allerdings vorwiegend zur Energieübertragung über kurze Distanzen und für kleine Energiemengen Verwendung. Daneben ist aus der US-B1-6 534 705 eine Vorrichtung zur Energieübertragung zu einer hochfliegenden Plattform beschrieben, die ein Verfahren der eingangs genannten Art verwendet. Das Auffinden der Plattform sowie die Grobausrichtung des Laserstrahls erfolgen bei diesem bekannten Verfahren über externe Hilfsmittel, wie Radar, Infrarot-Scanner und dergleichen. Die eigentliche Energieübertragung wird mittels gebündelter, separater Einzellaser sichergestellt, während zum Nachverfolgen der Empfangsstation sowie zur Feinausrichtung des Laserbündels bei diesem bekannten Verfahren ein separater Laser eingesetzt wird, dessen Rückstrahlung von Reflektoren an der Empfangsplattform erfasst und vermessen wird.

Für eine Ausrichtung ist eine gesonderte Einheit in Form eines Radars erforderlich, wobei ein Energieübertragungsstrahl ausschaltbar ist, wenn der Empfänger nicht identifiziert ist.

Ausgehend von dieser bekannten Anordnung und dem mit ihr realisierten Verfahren ist es Aufgabe der Erfindung, ein solches Verfahren und eine Vorrichtung zur Durchführung dieses Verfahrens für Raumfahrzeuge so auszubilden, daß es auf einfache Weise und mit möglichst geringem apparativen Aufwand eine drahtlose Energieübertragung zur automatischen Versorgung einer weit entfernten mobilen Einheit mit Energie und eine Ausrichtung mit gleichen Mitteln ermöglicht und das zugleich einfach, sicher und flexibel einsetzbar ist. Ferner soll durch die Erfindung eine möglichst einfach aufgebaute Vorrichtung zur Durchführung eines solchen Verfahrens bereitgestellt werden.

Zur Durchführung des Verfahrens ist vorgesehen, daß vom Empfänger ein Teil der einfallenden, die Energie übertragenden Laserstrahlung zur Sendeeinheit zurück reflektiert wird und aus diesem reflektierten Strahl Informationen für eine Ausrichtung der Sendeeinheit abgeleitet und an eine mit einer Ausrichteinheit für die Sendeeinheit verbundene Regelungseinheit übermittelt werden, wobei auch Bewegungen des Empfängers um seine momentane Position erfaßt werden und der Laserstrahl mittels eines vorgebbaren Algorithmus eine am Empfänger angeordnete Solarzelle überstreicht und dabei ein Teil des Strahles einen um die Solarzelle angeordneten Retroreflektor tangiert sowie die Ausrichtung in zwei zueinander senkrechten Richtungen erfolgt, indem die beiden Richtungen eine Modulation und Auswertung in unterschiedlichen Frequenzen vorgenommen wird.

Die Vorrichtung zur Durchführung des Verfahrens besteht darin, daß die Sendeeinheit über eine Steuerungseinheit sowie Stelleinrichtungen ansteuerbare Spiegel zur Ablenkung des Strahles aufweist und daß die Empfangseinheit einen eine Photozellenanordnung ringförmig umgebenden Reflektor aufweist.

In vorteilhafter Weiterbildung der Erfindung ist am Empfänger eine automatische Ausrichteinheit vorgesehen, um das Energieempfangsfeld optimal auf den eintreffenden Energiestrahl auszurichten. Ein manueller Eingriff in diese Regelung ist nicht erforderlich, so daß auch keine externen Medien für die Ausrichtung und Feineinstellung erforderlich sind.

Durch die in vorteilhafter Weiterbildung der Erfindung vorgesehene Modulation des Laserstrahls wird die Bewegung des Empfängers analysiert und der Strahl wird über die Transmittervorrichtung nachgeführt. Die erfindungsgemäß vorgesehene Regelung, die auf einer Messung der Intensität der reflektierten Strahlung basiert, ermöglicht damit das Folgen des Strahls bei einer Bewegung des Empfängers sowohl in horizontaler als auch in vertikaler Richtung.

Nachfolgend soll die Erfindung anhand von in der Zeichnung dargestellten Ausführungsbeispielen näher erläutert werden. Es zeigen:
- Fig. 1: den Aufbau einer Sendeeinheit,
- Fig. 2: ein Detail der Anordnung gemäß Fig. 1,
- Fig. 3: eine schematische Darstellung eines Empfängers in Vorderansicht,
- Fig. 4: eine rückwärtige Ansicht des Empfänger gemäß Fig. 3,
- Fig. 5: eine schematische Darstellung eines Nachstellmechanismus der Anordnung gemäß Fig. 3 und 4,
- Fig. 6: eine schematische Darstellung der Vorgehensweise zum Auffinden eines Reflektors,
- Fig. 7: eine schematische Darstellung des Vorgangs zum Erfassen des Reflektorringes,
- Fig. 8: eine schematische Darstellung eine Methode zur Nachführung des Laserstrahls,
- Fig. 9:: eine schematische Darstellung einer weiteren Nachführmethode,
- Fig. 10: das Auftreten der fundamentalen und der ersten Harmonischen der Modulationsfrequenz in Abhängigkeit von der räumlichen Verstimmung

Bei der in den Figuren dargestellten Vorrichtung dient eine Lasereinheit 1 als Energiequelle. Der Strahl dieses Lasers wird durch eine in die Lasereinheit 1 integrierte Aufweitoptik verbreitert, bevor er in eine Ablenkeinheit eintritt. Diese besteht aus drei drehbaren Elementen 9, 10a und 10b. Die Einheit 9, an der die Einheiten 10a und 10b sowie die Antriebseinheit 3 befestigt sind, wird über die Antriebseinheit 2 und den Antriebsring 6 um die Achse a gedreht. Die Achse a ist identisch mit der optischen Achse des aus dem Laser emittierten Lichtstrahles. In der Einheit 9 ist unter einem Winkel von 45° zur Achse a der Ablenkspiegel 4 befestigt, der den Laserstrahl in die Richtung b ablenkt, die somit senkrecht zur Achse a steht. Die Achse b, die durch Drehen der Einheit 9 und die Achse a in beliebiger Richtung gewählt werden kann, ist die optische Achse des Laserstrahls zwischen den Spiegeln 4 und die Rotationsachse der Einheiten 10a und 10b, wenn diese durch die Antriebseinheit 3 und die Antriebsringe 7 und 8 relativ gegenüber der Einheit 9 gedreht werden.

Der Spiegel 5 ist in der Einheit 10a in der Grundstellung in einem Winkel von 45° zur Achse b angeordnet und lenkt den Laserstrahl auf die Richtung ab unter der er die Sendeeinheit verlässt. Über zwei elektromechanische Stellelemente 11 und 12, beispielsweise Piezo-Aktoren, wird der Spiegel 5 um zwei Achsen senkrecht zur Achse b gekippt. Diese Kippbewegung hat einen kleineren Stellbereich aber eine kürzere Stellzeit als die Drehung um die Achsen a und b. Somit werden langsame Bewegungen des Laserstrahls um große Ablenkwinkel durch die Drehung um die Achsen a und b realisiert; schnelle aber kleinere Bewegungen durch die Stellelemente 11 und 12. Die Drehwinkel um die Achsen a bzw. b können 360° oder größer sein. Synchron mit der Einheit 10 a wird auch die Einheit 10 b um die Achse b gedreht. An der Einheit 10 b ist die Detektoreinheit, bestehend beispielsweise aus einem Parabolspiegel 28 und einem Strahlungsdetektor 29, zur Aufnahme des von dem Empfänger rückreflektierten Lichtes installiert. Das synchrone Drehen der Einheiten 10a und 10b garantiert, dass die Detektoreinheit stets auf die Richtung ausgerichtet ist unter der der Laserstrahl die Sendeeinheit verlässt.

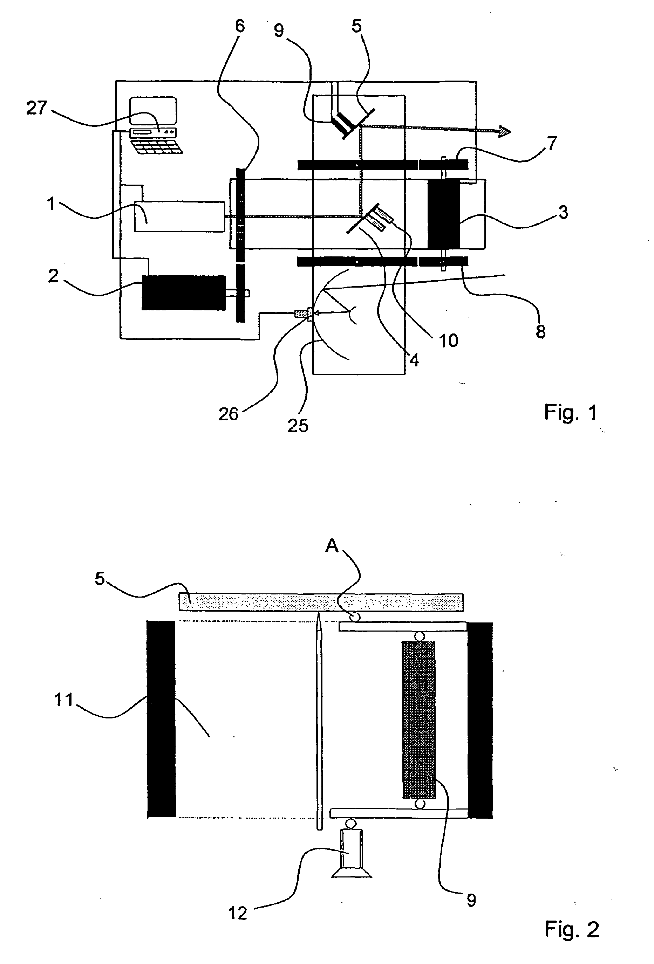

Der Aufbau eines solchen Feinstellgliedes auf der Basis eines Piezokristallantriebes ist schematisch im Detail in Fig. 2 dargestellt. Wie ersichtlich, ist jeder der Spiegel 4 bzw. 5 um einen Punkt A schwenkbar gehaltert. In dieser Darstellung ist der Einfachheit halber nur ein Piezokristall 9 gezeigt. Der Piezokristall ist zwischen zwei Hebelarmen 13,14 angeordnet, bei der der eine Hebelarm 13 den Spiegel direkt auslenkt, während mit dem anderen Hebel 14 über eine Justiereinrichtung 15 das gesamte Piezoelement justiert und vorgespannt werden kann. Die gesamte Aufhängung für beide Piezokristalle für einen Spiegel ist in einem eigenen verzerrungsarmen Gehäuse 16 untergebracht.

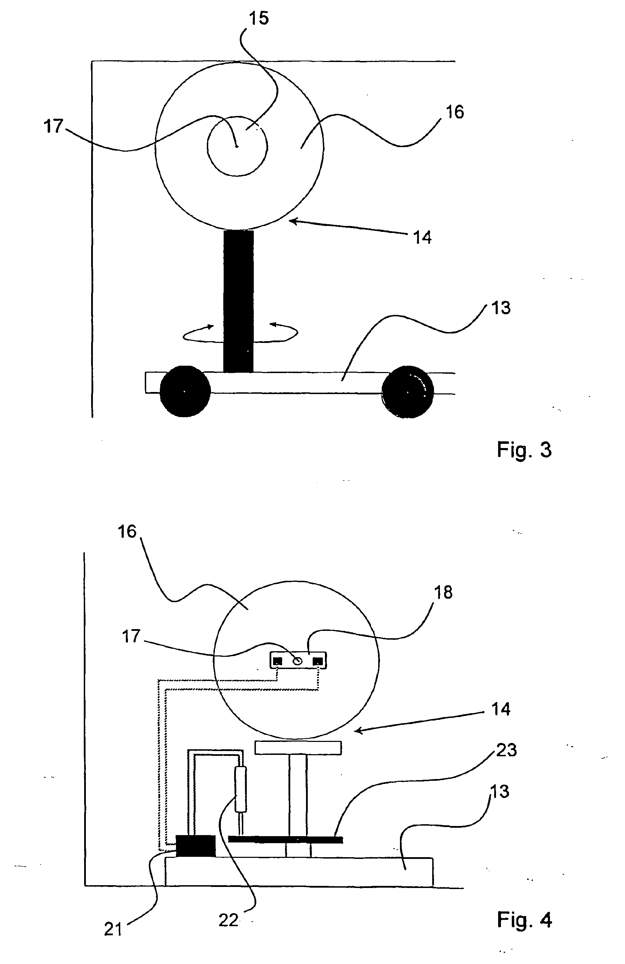

Der mobile Empfänger, der beispielsweise ein einem Raumfahrzeug oder, wie im Fall des hier beschriebenen Ausführungsbeispiels auf einem Erkundungsfahrzeug 17 angeordnet ist, befindet sich in einer beliebigen Entfernung vom Sender, jedoch in dessen direktem Sichtfeld. Dieser Empfänger besitzt, wie aus den Figuren 3 und 4 ersichtlich ist, einen dreh- und regelbaren Aufsatz 18, der dem Empfang des Laserstrahls dient. Der Strahlempfänger 18 ist aus einer Solarzellenfläche 19 und einer diese umgebenden, den Laserstrahl zum Sender zurück reflektierenden Fläche 20 aufgebaut. Dabei wandeln die Solarzellen das auftreffende Licht des Laserstrahles in Strom um, der zur Energieversorgung des Empfängers genutzt wird. Aufgrund des Strahlprofils trifft stets ein Teil des Laserstrahles auf den umgebenden Reflektorring 20, so daß von diesem der nicht auf die Solarzellen 19 treffende Teil des Lichtes zur Sendeeinheit zurück reflektiert wird. Die Größe des Laserstrahls ist so gewählt, daß sie kleiner als der Durchmesser der Solarzelle 19 ist, um sicherzustellen, daß der Hauptanteil der zur Verfügung stehenden Lichtenergie für die Umwandlung in elektrische Energie genutzt wird und nur ein sehr geringer Anteil reflektiert wird.

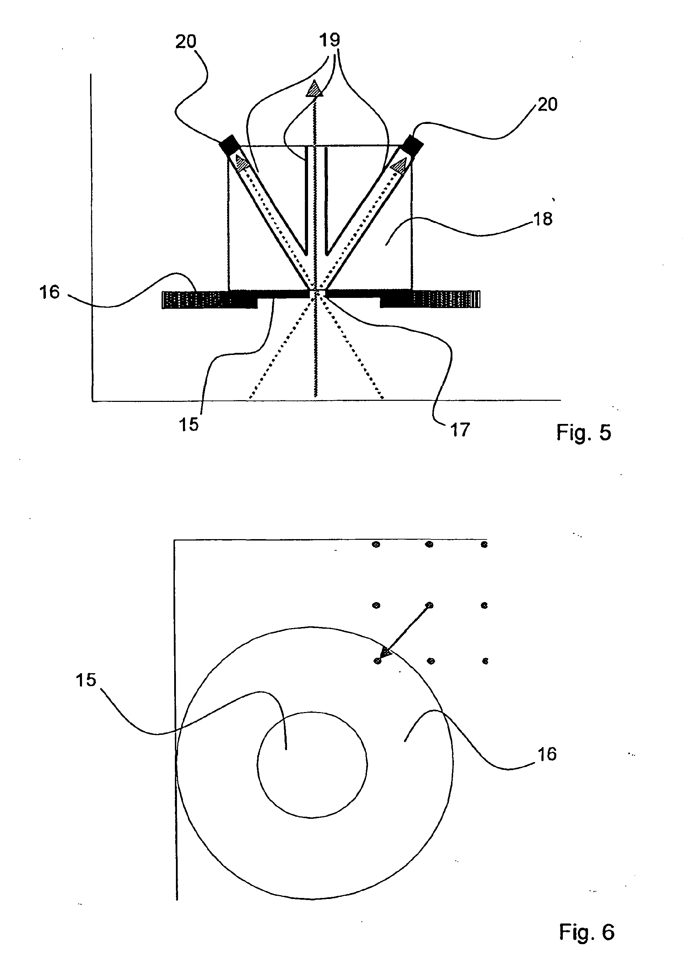

Weiterhin ist bei dem hier beschriebenen Ausführungsbeispiel und wie in den Figuren 4 und 5 dargestellt, in den Strahlempfänger 18 eine Ausrichteinheit integriert, die sicherstellt, daß der Strahlempfänger mit seinen beiden Querachsen stets normal zum einfallenden Strahl steht. Herzstück dieser Ausrichteinheit ist ein hinter einem kleinen Loch 21 im Zentrum der Solarzellen 19 angeordneter richtungsempfindlicher Sensor 22, der im Detail in Fig. 5 gezeigt ist und der aus an den Enden von Strahlrohren 23 angeordneten Photodioden 24 besteht. Mittels dieses Sensors 22 kann jederzeit gemessen werden, ob sich der Aufsatz 18 noch mit seinen beiden Achsen senkrecht zum Strahl befindet. Sobald in einer nachgeschalteten Auswerteeinheit 25 eine Abweichung festgestellt wird, wird von einer in diese integrierten Steuerungselektronik über Motoren 26 und Antriebselemente 27 der Aufsatz 18 in seiner Orientierung nachgeregelt.

Der vom Empfänger zurück reflektierte Anteil des Lichtes wird in der Sendereinheit über einen Parabolspiegel 28 aufgefangen und über über einen zentralen Sensor 29 und spezifische Filter in ein Informationssignal bezüglich der Position des Strahles auf der Solarfläche des Empfängers umgewandelt. Dieses Signal wird in einer Steuerungseinheit 30 des Senders dazu verwendet, die optimale Ausrichtung der Spiegel 4 und 5 einzustellen und nachzuregeln.

Der Steuercomputer 30 steuert dabei auf der Basis des aufgefangenen Reflektionssignals in einer kaskadierten Regelung sowohl die Motoren 2 und 3 für die Grobbewegung als auch die Piezokristalle 9,10 und 11,12 für die feinmotorischen Bewegungen beider Spiegel 4 und 5 um ihren jeweiligen Drehpunkt A an und regelt auf diese Weise das Gesamtsystem nach.

Neben den Sende- und Empfangseinheiten gehört weiterhin ein Steuerprogramm, das den gesamten prozeduralen Ablauf der automatischen Energieübertragung von einer Sendeeinheit zu einer mobilen Empfangseinheit beinhaltet, zur Vorrichtung. Dieses Steuerungsprogramm besteht im wesentlichen aus zwei Teilen: Einem Suchalgorithmus, der das Suchen und Auffinden der Empfängereinheit in einem großen Bereich ermöglicht, und einer Nachführung, die dafür sorgt, daß eine gefundene Empfängereinheit auch über längere Zeiträume genau nachgeführt und damit konstant mit Energie versorgt werden kann.

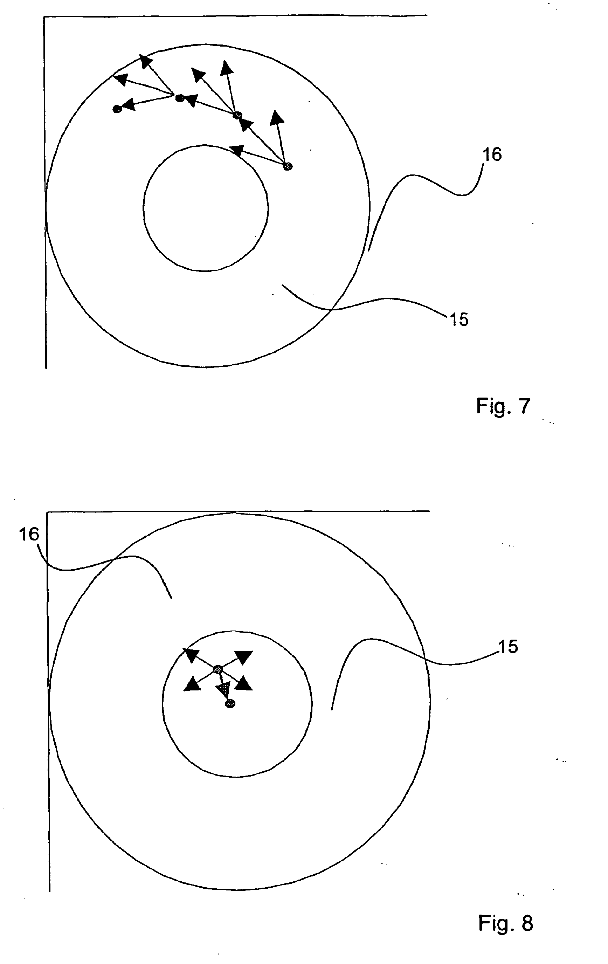

Im Suchmodus werden anfangs die Motor-Getriebeeinheiten der Sendeeinheit dazu verwendet, mit einem abgeschwächten Laserstrahl den Zielbereich großflächig zeilenweise nach einem Rückreflex abzuscannen. Wird eine solche Reflexion erfaßt, so wird in einem Submodus die nähere Umgebung der letzten Reflektionsposition genauer gescannt und dabei selbständig der Mittelkreis Rₘ des Reflektorringes 20 ermittelt. Hierbei wird der Strahl über die Feinsteuerung mittels der Piezokristalle 9,10 und 11,12 positioniert. Dies geschieht in einem zweistufigen Vorgehen dadurch, daß in einem ersten Schritt ein Suchraster in Form einer 3 mal 3 Matrix vermessen wird und dabei die lichtstärkste Position bestimmt und als neuer Startpunkt gewählt wird, wie dies in Fig. 6 veranschaulicht ist. Dieser Vorgang wird mehrmals wiederholt. In einem nachfolgenden zweiten Schritt wird dann die Form des Ringes und damit die Zentralposition der Solarflächen 19 erfaßt. Dieser Algorithmus wird anhand von Fig. 7 veranschaulicht. Vom Ausgangspunkt werden mehrere Suchschritte, hier an 3 Schritten exemplarisch gezeigt, in eine ähnliche Richtung durchgeführt, bei denen für jeden einzelnen Schritt die Reflektionssignalstärke gemessen wird. Die Schrittrichtung mit dem stärksten Signalwert wird als neue Hauptanalyserichtung angenommen, und der Vorgang so oft wiederholt, bis die Kontur des Ringreflektors komplett erfaßt ist. Auf der Basis der Einzelpositionen kann nun mit einer Schwerpunktsberechnung der aufgespannten Fläche das Zentrum dieser Fläche bestimmt werden und der Sendestrahl damit genau auf die Solarzellen 19 in der Mitte des Ringes 20 geführt werden. Dieses Verfahren ist so ausgerichtet, dass zum Suchen und Erfassen der Solarzellen die Empfangseinheit nicht notwendigerweise bereits normal zur Strahlrichtung ausgerichtet sein muß, sondern auch Schräglagen sicher detektiert und vermessen werden.

Zur sicheren Nachführung des Sendestrahles auf die gefundene und vermessene Empfangseinheit sind alternativ vier verschiedene Grundalgorithmen vorgesehen, die nachfolgend näher beschrieben werden sollen.

Bei dem ersten Verfahren, das auch als "Random Walk" bezeichnet wird, wird die Position der Laserstrahls von der Startposition aus um einen kleinen Schritt in eine beliebige Richtung verändert und mittels des vom Empfänger rückreflektierten Lichtes bestimmt, ob dieser Schritt eine Verbesserung oder Verschlechterung darstellte. Bei einer Verschlechterung wird auf die Startposition zurückgesprungen; bei einer Verbesserung wird die neue Position als neue Startposition beibehalten. Danach wird die Prozedur mit einem neuen Schritt in eine beliebige Richtung fortgesetzt. Die Entscheidung ob ein Positionswechsel zu einer Verbesserung oder Verschlechterung geführt hat, kann beispielsweise über die Gesamtintensität des rückreflektierten Lichtes bestimmt werden, je näher der Position des Laserstrahls an der Mitte der Solarzelle 21 ist, umso weniger Licht trifft auf den Reflektorring 20 und wird reflektiert oder sie kann beispielsweise durch das "Modulationsverfahren" d.h. durch die Detektion der doppelten Frequenz bestimmt werden, so wie es weiter hinten als eigene Methode beschrieben ist.

Bei der zweiten, als "Schwerpunkt-Verfahren" bezeichneten Vorgehensweise wird die momentane Position des Laserstrahls als Mittelpunkt festgelegt. Nun werden mindestens drei Vektoren gleicher Länge, jedoch verschiedener Richtungen gewählt. Die Richtungen sind vorzugsweise so gewählt, daß sie achsensymmetrisch zur horizontalen und vertikalen Achse sind, wie dies in Fig. 8 für 4 Vektoren veranschaulicht ist. Dann wird der Strahl in jede Vektorrichtung positioniert und die Signalstärke an jedem Endpunkt bestimmt. Nachdem jede Position einmal gemessen wurde, werden über eine Schwerpunktberechnung die Vektoren mit ihrer Signalstärke zueinander gewichtet. Als Ergebnis ergibt sich ein neuer Vektor, der in die Richtung stärkster Intensität zeigt und dessen Betrag ein Maß für den Abstand des Versatzes ist. Anhand dieses Vektors wird der neue Mittelpunkt bestimmt. Das Verfahren läßt sich noch optimieren, indem nach jeder einzelnen Messung bereits ein Korrekturschritt aus neuen und alten Vektoren bestimmt wird. Durch diese Optimierung erhöht sich zum einen die Reaktionsfähigkeit des Systems zum anderen werden Richtungsänderungen glatter gestaltet, da bereits nach jeder Messung leicht korrigiert wird und nicht erst nach einem vollem Zyklus.

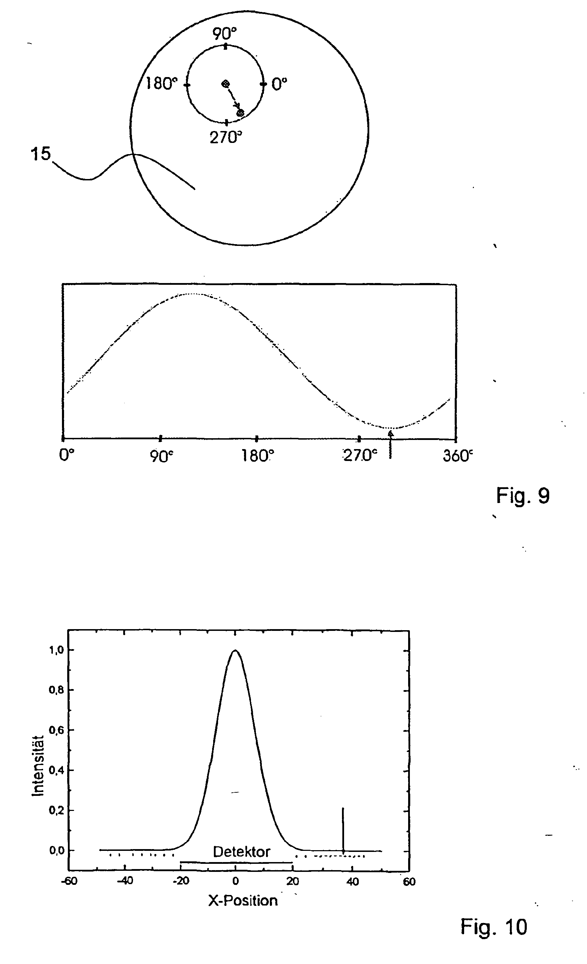

Beim dritten, dem sogenannten "Kreis-Verfahren", wird auf den in Strahlrichtung zweiten Spiegel 5 in horizontaler Richtung eine Modulation der Frequenz f und in vertikaler Richtung eine Modulation derselben Frequenz, aber um 90 Grad phasenverschoben, geprägt. Dadurch führt der Spiegel 5 Kreisbewegungen durch und der Laserstrahl wird auf diese Weise um den Mittelpunkt moduliert. Durch Messung der Referenzspannung an den Piezokristallen ist es möglich, zu ermitteln, in welchem Winkel der Spiegel 5 gerade steht. Jetzt wird genau ein Kreisdurchgang lang kontinuierlich gemessen. Das Reflektionssignal beschreibt dann über der Richtung eine sinusförmige Kontur, wie in Fig. 9 veranschaulicht. Je größer die Amplitude ist, desto weiter befindet sich der Strahl von der Mitte entfernt auf der Reflektionsfolie. Durch einen Vergleich mit dem Referenzsignal ist es so möglich, den einzelnen Phasen Richtungen zuzuordnen und es wird in die Richtung schwächster Intensität regelt, um im Zentrum der Solarflächen zu sein.

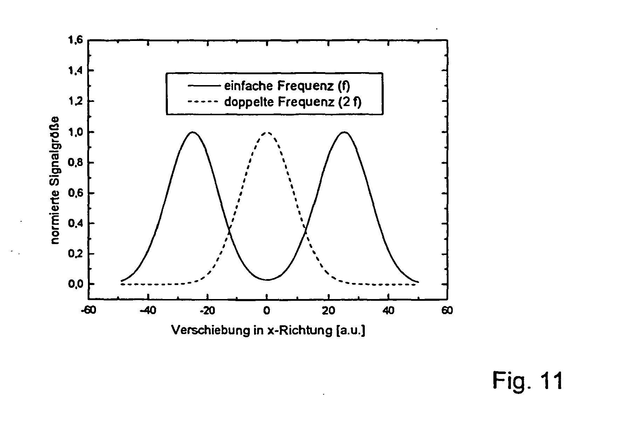

Beim vierten, dem so genannten "Modulations-Verfahren" wird die Position x des Laserstrahls um seine Mittenposition x_{M} in Abhängigkeit von der Zeit t mit einer Modulationsfrequenz f gemäß x = x_{M} + xₒ sin(2 n f t) moduliert. Da, wie aus Fig. 10 hervorgeht, stets ein Teil der Laserstrahles auf den Reflexionsring 20 trifft, wird das rückreflektierte Licht mit der Frequenz f und deren höheren Harmonischen moduliert sein. Die Figur 11 zeigt die rückreflektierte Lichtintensität in Abhängigkeit der Position des Laserstrahls auf dem Empfänger. Ist x_{M} genau der in Mitte der Photozelle 19 und xₒ kleiner als der Radius der Photozelle, so treffen Teilbereiche des Laserstrahls bei einem Schwingungsdurchgang sowohl rechts wie links auf den Reflektorring 20. Das rückreflektierte Licht ist mit der doppelten Frequenz 2 f moduliert. Je weiter x_{M} von der Mitte der Photozelle entfernt ist, umso geringer wird die Komponente bei 2f, denn auf einer Seite wird der Reflektorring 20 immer weniger getroffen. Ist x_{M} genau auf dem Rand der Photozelle 20, so wird bei einem Schwingungsvorgang in der halben Zeit die Photozelle 19 und in der anderen halben Zeit der Reflektorring 20 überstrichen; das rückreflektierte ist jetzt nur mit der Frequenz f moduliert und hat so gut wie keine Komponenten bei der Frequenz 2 f. Sollte der Laserstrahl auf den Mittenradius des Reflektorrings 20 (r_{M} in Figur 6) gerutscht sein, so tritt im rückreflektierten Licht wieder eine starke Komponente bei der Frequenz 2 f auf; diese Komponente ist aber gegenüber der Position "x_{M} in der Mitte der Photozelle" um 180° phasenverschoben, da der Lichtstrahl bei den Umkehrpunkten der Schwingung auf gering reflektierende Strukturen trifft.

Somit ist aus der Größe und der Phase der Komponente bei Frequenz 2 f abzuleiten, wie gut die Position des Laserstrahls x_{M} mit der Mitte der Photozelle 20 übereinstimmt. Für einen Regelkreis kann beispielsweise ein Lock-In-Verstärker oder eine Fourier-Analyse herangezogen werden.

Das Modulationsverfahren ist nicht auf eine Dimension beschränkt. Der Spiegel 5 kann beispielsweise in horizontaler sowie in vertikaler Richtung mit zwei unterschiedlichen Frequenzen f₁ und f₂ moduliert werden. Vorzugweise werden beide Frequenzen deutlich unterschiedlich und in einem nicht rationalen Verhältnis zueinander gewählt, um in der Frequenzanalyse des rückreflektierten Lichtes genau erkennen zu können, in welcher Weise die Position des Laserstrahls von der Mitte der Solarzelle abweicht.

Auf diese Weise wird bei jedem der vorangehend beschriebenen Verfahren eine optimale Ausrichtung der Anordnung erzielt, die zugleich einen maximalen Energieübertrag gewährleistet.

## Patentansprüche

1. Verfahren zur Energieübertragung und Ausrichtung eines mobilen Empfängers an einem Raumfahrzeug und einer Sendeeinheit, bei dem die Energie in Form kohärenter elektromagnetischer Strahlung übertragen wird, die als gerichteter, geregelter Laserstrahl von einer Sendeeinheit auf den Empfänger gesandt wird, **dadurch gekennzeichnet, daß** vom Empfänger ein Teil der einfallenden, die Energie übertragenden Laserstrahlung zur Sendeeinheit zurück reflektiert wird und aus diesem reflektierten Strahl Informationen für eine Ausrichtung der Sendeeinheit abgeleitet und an eine mit einer Ausrichteinheit für die Sendeeinheit verbundene Regelungseinheit übermittelt werden, wobei auch Bewegungen des Empfängers um seine momentane Position erfaßt werden und der Laserstrahl mittels eines vorgebbaren Algorithmus eine am Empfänger angeordnete Solarzelle überstreicht und dabei ein Teil des Strahles einen ringförmig um die Solarzelle angeordneten Retroreflektor tangiert sowie die Ausrichtung in zwei zueinander senkrechten Richtungen erfolgt, indem in beiden Richtungen eine Modulation und Auswertung in unterschiedlichen Frequenzen vorgenommen wird.

2. Verfahren nach Anspruch 1, **dadurch gekennzeichnet, daß** über eine Modulation des Laserstrahls die momentane Position des Empfängers ermittelt wird.

3. Verfahren nach Anspruch 1 oder 2, **dadurch gekennzeichnet, daß** der Laserstrahl den Reflektor in einem Random Walk-Verfahren überstreicht.

4. Verfahren nach Anspruch 3, **dadurch gekennzeichnet, daß** der Laserstrahl den Reflektor in einem gewichteten Random Walk-Verfahren überstreicht.

5. Verfahren nach einem der Ansprüche 1 bis 4, **dadurch gekennzeichnet, daß** die Ausrichtung über eine Modulation der Richtung des Laserstrahles mit der Frequenz f und einer Auswertung der Frequenzkomponente 2f im reflektierten Licht erfolgt.

6. Verfahren nach einem der Ansprüche 1 bis 5, **dadurch gekennzeichnet, daß** die Ausrichtung des Laserstrahls über ein Schwerpunkt-Verfahren erfolgt.

7. Verfahren nach einem der Ansprüche 1 bis 5, **dadurch gekennzeichnet, daß** die Stabilsierung des Laserstrahls über eine Kreis-Verfahren erfolgt.

8. Verfahren nach einem der Ansprüche 1 bis 7, **dadurch gekennzeichnet, daß** die Laserstrahlung im Wellenlängenbereich zwischen 200 Nanometern und 10 Mikrometern liegt.

9. Verfahren nach einem der Ansprüche 1 bis 8 **dadurch gekennzeichnet, daß** zwischen langsamen und schnellen Bewegungen unterschieden wird.

10. Vorrichtung zur Durchführung des Verfahrens zur Energieübertragung und Ausrichtung nach einem der Ansprüche 1 bis 9, bestehend aus einer einen energieübertragenden, gerichteten und geregelten Laserstrahl aussendenden Sendeeinheit und einer einfallende Strahlung erfassenden Empfänger, **dadurch gekennzeichnet, daß** die Sendeeinheit über eine Steuerungseinheit (30) sowie Stelleinrichtungen (2, 3, 6 - 8) ansteuerbare Spiegel (4, 5) zur Ablenkung des Strahles aufweist und daß die Empfänger einen eine Photozellenanordnung (19) ringförmig umgebenden Retroreflektor (20) aufweist.

11. Vorrichtung nach Anspruch 10, **dadurch gekennzeichnet, daß** die Spiegel (4, 5) um die optischen Achsen des Lichtstrahles drehbar gehaltert sind.

12. Vorrichtung nach Anspruch 9 oder 10, **dadurch gekennzeichnet, daß** die Empfangseinheit mit einer Anordnung (18 - 27) zur Ausrichtung der Detektorfläche (19, 20) auf die Strahlrichtung versehen ist.

## Claims

1. Method for energy transmission and alignment of a mobile receiver on a spacecraft and a transmission unit, in which the energy is transmitted in the form of coherent electromagnetic radiation which is sent as a directed, regulated laser beam from the transmission unit to the receiver, **characterised in that** a part of the incident laser radiation transmitting the energy is reflected back to the transmission unit by the receiver and information for aligning the transmission unit is derived from this reflected beam and communicated to a control unit connected to an aligning unit for the transmission unit, movements of the receiver about its instantaneous position also being detected and the laser beam scanning a solar cell arranged on the receiver by means of a predeterminable algorithm such that a part of the beam grazes a retroreflector arranged annularly around the solar cell, and the alignment being carried out in two mutually perpendicular directions by performing modulation and evaluation at different frequencies in the two directions.

2. Method according to Claim 1, **characterized in that** the instantaneous position of the receiver is determined via modulation of the laser beam.

3. Method according to Claim 1 or 2, **characterized in that** the laser beam scans the reflector in a random walk method.

4. Method according to Claim 3, **characterized in that** the laser beam scans the reflector in a weighted random walk method.

5. Method according to one of Claims 1 to 4, **characterized in that** the alignment is carried out via modulation of the direction of the laser beam with a frequency f and evaluation of the frequency component 2f in the reflected light.

6. Method according to one of Claims 1 to 5, **characterized in that** the alignment of the laser beam is carried out via a centroid method.

7. Method according to one of Claims 1 to 5, **characterized in that** the stabilisation of the laser beam is carried out via a circle method.

8. Method according to one of Claims 1 to 7, **characterized in that** the laser radiation lies in the wavelength range between 200 nanometres and 10 micrometres.

9. Method according to one of Claims 1 to 8, **characterized in that** discrimination is made between slow and rapid movements.

10. Device for carrying out the energy transmission and alignment method according to one of claims 1 to 9, consisting of a transmission unit emitting a directed and regulated energy-transmitting laser beam and a receiver detecting incident radiation, **characterised in that** the transmission unit comprises mirrors (4, 5) which can be driven via a control unit (30) and actuators (2, 3, 6 - 8) in order to deflect the beam, and **in that** the receiver comprises a retroreflector (20) annularly surrounding a photocell arrangement (19).

11. Device according to Claim 10, **characterized in that** the mirrors (4, 5) are mounted so that they can rotate about the optical axes of the light beam.

12. Device according to Claim 9 or 10, **characterized in that** the reception unit is provided with an arrangement (18 - 27) for aligning the detector surface (19, 20) with the radiation direction.

## Revendications

1. Procédé pour transmettre de l'énergie et aligner un récepteur mobile sur un engin spatial et une unité d'émission, dans lequel l'énergie est transmise sous la forme d'un rayonnement électromagnétique cohérent, qui est émis sous la forme d'un rayon laser dirigé et ajusté depuis une unité d'émission sur le récepteur, **caractérisé en ce qu'**une partie du rayonnement laser incident transmettant l'énergie est réfléchie du récepteur vers l'unité d'émission, on tire de ce rayon réfléchi des informations pour un alignement de l'unité d'émission et on les transmet à une unité de réglage raccordée à une unité d'alignement pour l'unité, d'émission, dans lequel sont même enregistrés des mouvements du récepteur autour de sa position momentanée, le rayon laser balaie une pile solaire aménagée sur le récepteur au moyen d'un algorithme prédéterminable et, en l'occurrence, une partie du rayon est tangente à un rétroréflecteur aménagé en forme d'anneau autour de la pile solaire, tandis que l'alignement se fait dans deux directions perpendiculaires l'une à l'autre en effectuant une modulation et une évaluation à des fréquences différentes dans les deux directions.

2. Procédé selon la revendication 1, **caractérisé en ce que** l'on détermine la position momentanée du récepteur par une modulation du rayon laser.

3. Procédé selon la revendication 1 ou 2, **caractérisé en ce que** le rayon laser balaie le réflecteur par une procédure d'excursion aléatoire.

4. Procédé selon la revendication 3, **caractérisé en ce que** le rayon laser balaie le réflecteur par une procédure d'excursion aléatoire pondérée.

5. Procédé selon l'une quelconque des revendications 1 à 4, **caractérisé en ce que** l'on réalise l'alignement par une modulation de la direction du rayon laser avec la fréquence f et une évaluation de la composante de fréquence 2f dans la lumière réfléchie.

6. Procédé selon l'une quelconque des revendications 1 à 5, **caractérisé en ce que** l'alignement du rayon laser se fait par une procédure axée sur le centre de gravité.

7. Procédé selon l'une quelconque des revendications 1 à 5, **caractérisé en ce que** la stabilisation du rayon laser se fait selon une procédure circulaire.

8. Procédé selon l'une quelconque des revendications 1 à 7, **caractérisé en ce que** le rayonnement laser se situe dans la plage de longueurs d'onde entre 200 nanomètres et 10 micromètres.

9. Procédé selon l'une quelconque des revendications 1 à 8, **caractérisé en ce que** l'on distingue entre mouvements lents et mouvements rapides.

10. Dispositif pour réaliser le procédé de transmission d'énergie et d'alignement selon l'une quelconque des revendications 1 à 9, constitué d'une unité d'émission émettant un rayon laser dirigé et ajusté, transmettant de l'énergie, et d'un récepteur détectant un rayonnement incident, **caractérisé en ce que** l'unité d'émission présente des miroirs (4, 5) que l'on peut commander par une unité de commande (30) et des dispositifs de réglage (2, 3, 6 à 8) pour dévier le rayon et **en ce que** le récepteur présente un rétroréflecteur (20) entourant en forme d'anneau un aménagement de photopiles (19).

11. Dispositif selon la revendication 10, **caractérisé en ce que** les miroirs (4, 5) sont montés à rotation autour des axes optiques du rayon lumineux.

12. Dispositif selon la revendication 9 ou 10, **caractérisé en ce que** l'unité de réception est pourvue d'un aménagement (18 à 27) pour aligner la surface du détecteur (19, 20) dans la direction du rayon.
